# EUROPÄISCHE PATENTANMELDUNG

(11) **EP 2 293 036 A2**
(43) Veröffentlichungstag der Anmeldung: **09.03.2011**
(21) Anmeldenummer: 10007537.3
(22) Anmeldetag: 21.07.2010
(51) Int. Cl.: G01L 1/04, G01L 1/26, G01L 5/00, H01H 35/00

(54) **Kraftüberwachungsvorrichtung mit einem Schalter**

(30) Priorität: 08.09.2009 DE 102009040521
(71) Anmelder: SIKO GmbH Dr. Ing. G. Wandres, 79256 Kirchzarten/Buchenbach (DE)
(72) Erfinder: Wandres, Horst, 79199 Kirchzarten (DE)
(74) Vertreter: Arat, Dogan

(57) **Zusammenfassung**

Bei einer Überwachungsvorrichtung (1, 1.1, 1.2), insbesondere Klemmkraftdose, zur Überwachung einer Kraft (2, 2.) bzw. eines Kraft ausübenden Elements (4, 4.2), gegen die eine Gegenkraft eines Energiespeichers (9) wirkt, soll dem Kraft ausübenden Element (4, 4.2) ein Schalter (14) zugeordnet sein.

## Beschreibung

### TECHNISCHES GEBIET

Die Erfindung betrifft eine Überwachungsvorrichtung nach den Merkmalen des Oberbegriffs des Anspruchs 1 sowie eine Klemmvorrichtung und eine Verfahren zur Überwachung einer Klemmkraft.

### STAND DER TECHNIK

Aus dem Stand der Technik sind vielfältige Ausgestaltungen von Vorrichtungen bekannt, mit denen Kräfte überwacht werden können.

Beispielsweise müssen an Hebebühnen, Schraubstöcken, Hubtischen und ähnlichen Vorrichtungen bestimmte Mindestkräfte gehalten werden, um eine Funktion zu sichern. Meist werden dazu Dehnungsstreifen bzw. eine Kraftmessdose oder ein Kraftsensor, der einen Dehnungsstreifen umfasst, zu einer analogen Kraftüberwachung eingesetzt. Dehnungsstreifen sind allerdings relativ sensible und teure Bauteile, zudem aufwändig in der Montage und Justierung.

### AUFGABE

Aufgabe der vorliegenden Erfindung ist es, eine Vorrichtung zu schaffen, mit der eine Kraft, die auf ein Bauteil wirkt, überwacht werden kann. Zudem soll diese Vorrichtung vielfältig einsetzbar, preiswert und einfach in der Montage und im Betrieb sein.

### LÖSUNG DER AUFGABE

Zur Lösung der Aufgabe führen die Merkmale des kennzeichnenden Teils des Anspruchs 1 und die Merkmale der nebengeordneten Ansprüche.

Bei einer Überwachungsvorrichtung, insbesondere Klemmkraftdose, zur Überwachung einer Kraft bzw. eines Kraft ausübenden Elements, gegen die eine Gegenkraft eines Energiespeichers wirkt, ist dem Kraft ausübenden Element ein Schalter zugeordnet. Dabei ist der Schalter angeordnet so, um mit ihm eine Verformung des Energiespeichers bzw. einen Weg des Kraft ausübenden Elements zu erfassen. Das bedeutet, dass eine definierte, vorzugsweise axiale Kraft eine Änderung des Schaltzustandes des Schalters bewirkt. Das bringt den Vorteil mit sich, dass die Überwachung mit einem Schalter, als "binärem" Wegaufnehmer, auf die beiden Zustände "ausreichende Klemmkraft vorhanden" und "ausreichende Klemmkraft nicht vorhanden" reduziert wird. Dadurch können einfachere Bauteile eingesetzt und die zu erfassende Daten reduziert werden.

Die Überwachungsvorrichtung ist vorzugsweise in Kraftrichtung und noch bevorzugter axial an ein zu überwachendes Bauteil in Serie angeschlossen. Wenn das Bauteil mit einer Kraft, insbesondere Spann-, Klemm-, oder Zugkraft, beaufschlagt wird, erfährt auch die Überwachungsvorrichtung die auf das Bauteil wirkende Kraft.

Bevorzugt ist der Energiespeicher dazu ausgebildet, um Verformungsenergie zu speichern.

Er kann als elastisches Element, Gummistück, Federelement, insbesondere Spiral-, Schrauben- oder besonders bevorzugt als Tellerfeder, ausgeformt sein.

Zweckmässigerweise wird der zumindest eine Energiespeicher konzentrisch zu einer Rotationssymmetrieachse der Überwachungsvorrichtung angeordnet. Dazu weist die Überwachungsvorrichtung vorzugsweise einen Bolzen zur Aufnahme des vorzugsweise ringförmigen Energiespeichers auf, der in der Überwachungsvorrichtung gelagert ist. Besonders bevorzugt ist dieser Bolzen schwimmend in der Überwachungsvorrichtung gelagert.

Vorzugsweise sind in einer Überwachungsvorrichtung mehrere Energiespeicher angeordnet, die eine Gegenkraft erzeugen. Dabei sind diese Energiespeicher vorzugsweise in einem Stapel oder Paket auf dem schwimmenden Bolzen angeordnet. Noch bevorzugter bilden die Energiespeicher Stapel, wobei diese Stapel seitenverkehrt zueinander angeordnet sind. Das heisst, es können jeweils zwei, vier, sechs usw. Energiespeicher paarweise seitenverkehrt in die Überwachungsvorrichtung eingebracht sein.

Besonders bevorzugt umfasst die Überwachungsvorrichtung ein erstes und ein zweites Einspannelement. Dabei stellt das erste Einspannelement das Kraft ausübende Element dar. Das erste und das zweite Einspannelement sind axial fluchtend zueinander angeordnet. Besonders bevorzugt ist der Bolzen schwimmend zwischen dem ersten und dem zweiten Einspannelement gelagert, und der oder die Energiespeicher sind zwischen dem ersten und dem zweiten Einspannelement vorgesehen. Dadurch ergibt sich ein einfacher und stabiler Aufbau der Überwachungsvorrichtung.

Um die Verformung des oder der Energiespeicher oder den Weg eines Einspannelements bzw. des Kraft ausübenden Elements auf den Schalter zu übertragen bzw. dessen Schaltzustand zu ändern, wird vorzugsweise ein Taster eingesetzt. Dieser ist bevorzugt mit dem Kraft ausübenden Element verbunden oder einstückig an dieses angeformt.

In einem Ausführungsbeispiel umfasst die Überwachungsvorrichtung eine Ausgleichskupplung. Dazu können das erste und/oder das zweite Einspannelement als Ausgleichskupplung ausgeformt sein. Besonders bevorzugt ist dann zwischen die beiden Einspannelementen noch eine Ausgleichsplatte eingebracht. Zweckmässigerweise dient diese zur Lagerung des Bolzens.

Vorzugsweise weist die Ausgleichskupplung oder eines der Einspannelemente eine bombierte Oberfläche auf, die mit einem der Einspannelemente bzw. einer Rückseite der Ausgleichsplatte in Wirkverbindung steht. Auf dieser bombierten Oberfläche kann das zweite Einspannelement als Ausgleichsbewegung schwenken, kippen oder abrollen. Ebenfalls kann diese bombierte Oberfläche in einem Anschlag für die Einspannelemente eingeformt sein. Besonders bevorzugt kann die bombierte Oberfläche der Ausgleichskupplung auch mit einer bombierten Oberfläche eines Einspannelements oder eines Anschlags in Wirkverbindung stehen.

Vom Erfindungsgedanken ist auch die Ausbildung einer separaten Ausgleichskupplung umfasst. Vorzugsweise ist die Ausgleichskupplung dem ersten oder dem zweiten Einspannelement zugeordnet. Die Ausgleichskupplung bringt den Vorteil mit sich, dass Axialfehler der Überwachungsvorrichtung oder Axialfehler, die bei der Montage entstehen, ausgeglichen werden können.

Das erste und das zweite Einspannelement sind vorzugsweise in einem Gehäuse aufgenommen. Zweckmässigerweise ist das Gehäuse so ausgebildet, dass es für das erste und/oder das zweite Einspannelement als Führung wirkt. Besonders bevorzugt ist für die beiden Einspannelemente und/oder auch die Ausgleichskupplung jeweils ein Endanschlag vorgesehen. Besonders bevorzugt ist dieser Endanschlag als Sprengring ausgebildet. Noch bevorzugter ist der Sprengring in dem Gehäuse angeordnet. Des Weiteren kann der Endanschlag aber auch als Absatz in das Gehäuse eingeformt sein.

Um die Überwachungsvorrichtung an zu überwachende Teile, wie Spann-, Klemmzylinder, Zylinderschraube, Antrieb, Schlitten, Linearachse mit Kolbenstange, Hebebühne, Schraubstock, Hubtisch, Druckwalze, Stütze am Autokran, Kran, od. dgl. anzubinden, weist diese, bevorzugt zumindest das erste oder das zweite Einspannelement, eine Anschlussstelle auf. Zweckmässigerweise ist die Anschlussstelle als Gewinde, bevorzugt als Innen-oder Aussengewinde, ausgeführt.

Vom Erfindungsgedanken ist auch umfasst, eine solche Verbindungsstelle als Schnapp- oder Klemmverbindung auszubilden. Ebenfalls vom Erfindungsgedanken umfasst sind nicht lösbare Verbindungen zwischen dem überwachten Bauteil und der Überwachungsvorrichtung, wie Schweissen, Nieten, Kleben usw.

Allen oben stehend genannten Merkmalen und Ausführungsbeispielen der Überwachungsvorrichtung ist der Vorteil gemeinsam, dass auf einfache Art und Weise eine stabile Vorrichtung bereitgestellt wird. Diese ist zudem in der Anwendung, insbesondere Montage und Justierung, sehr einfach zu handhaben.

Schutz wird auch beansprucht für eine Klemmvorrichtung mit einer Überwachungsvorrichtung, wobei die Überwachungsvorrichtung angeordnet ist, um eine Klemmkraft der Klemmvorrichtung zu ermitteln. Dabei umfasst "ermitteln" alle Tätigkeiten im Sinne von messen, erfassen oder berechnen. Vorzugsweise wird die Klemmkraft mittels einer Kolben-/Zylindereinheit oder mittels eines Zylinders aufgebracht.

Des Weiteren ist vom Erfindungsgedanken auch ein Verfahren zur Überwachung einer Klemmkraft eines Bauteils unter Verwendung der Überwachungsvorrichtung umfasst.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen Längsschnitt einer erfindungsgemässen Überwachungsvorrichtung;
Figur 2 einen Längsschnitt eines weiteren erfindungsgemässen Ausführungsbeispiels der Überwachungsvorrichtung;
Figur 3 einen Teilschnitt eines weiteren erfindungsgemässen Ausführungsbeispiels einer Überwachungsvorrichtung.

### AUSFÜHRUNGSBEISPIELE

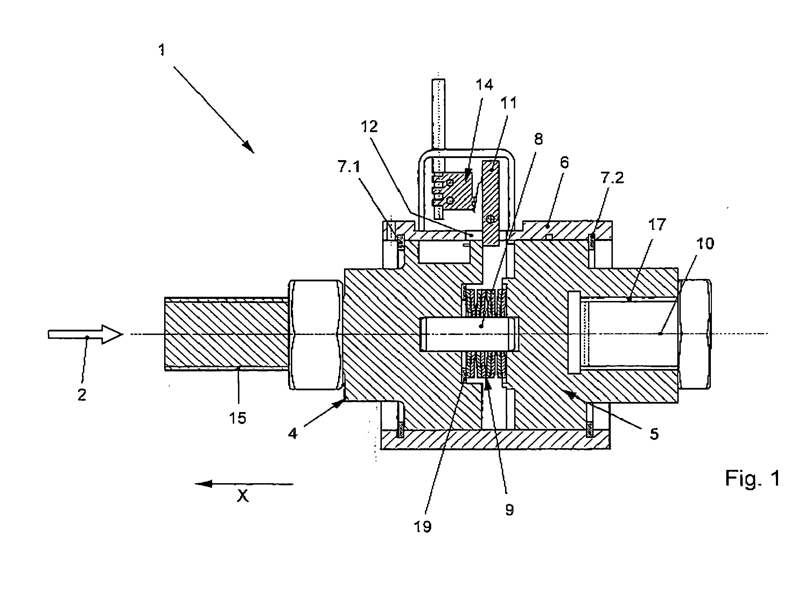

Figur 1 zeigt eine Überwachungsvorrichtung 1 zur Überwachung einer axialen Kraft 2 mit einem ersten Einspannelement 4 als Kraft ausübendes Element und einem zweiten Einspannelement 5. Diese sind in einem Gehäuse 6 angeordnet. Dabei dient das Gehäuse 6 zur Führung der beiden Einspannelemente 4 und 5. In dem Gehäuse 6 sind zwei Sprengringe 7.1 und 7.2 als Endanschläge für das erste Einspannelement 4 und das zweite Einspannelement 5 angeordnet.

Das erste Einspannelement 4 weist eine Anschlussstelle 15 auf, die als Aussengewinde zur Verbindung mit einem Bauteil ausgeführt ist, dessen Kraft 2 überwacht werden soll. Analog weist das zweite Einspannelement 5 eine weitere Anschlussstelle 17 auf, die als Innengewinde ausgeführt ist.

Zwischen den beiden Einspannelementen 4 und 5 ist ein Bolzen 8 schwimmend gelagert. Auf diesem schwimmend gelagerten Bolzen 8 ist ein Tellerfederpaket 9 aus vier Tellerfedern als Energiespeicher konzentrisch zu einer Mittelachse 10 der Überwachungsvorrichtung 1 und des Bolzens 8 angeordnet. Dabei liegt eine zweite Tellerfeder seitenverkehrt zu einer ersten Tellerfeder. Eine dritte Tellerfeder ist in der gleichen Richtung wie die erste Tellerfeder und somit seitenverkehrt zur zweiten Tellerfeder angeordnet. Die vierte Tellerfeder ist wiederum seitenverkehrt zu der nebenliegenden dritten Tellerfeder angeordnet.

Dem ersten Einspannelement 4 ist ein Taster 11 zugeordnet. Dieser ragt aus einer Öffnung 12 aus dem Gehäuse 6 heraus, um einen Schalter 14 als Wegaufnehmer zu betätigen.

Die Funktionsweise der vorliegenden Erfindung ist Folgende:
Beim Einbau wird die Überwachungsvorrichtung 1 auf eine gewünschte bzw. benötigte axiale Kraft 2 bzw. eine entsprechende Verformung der Tellerfedern bzw. des Tellerfederpakets 9 eingestellt und der Schalter 14 justiert.

Wird die Überwachungsvorrichtung 1 mit der axialen Druckkraft 2 beaufschlagt, so wird das erste Einspannelement 4 gegen den Widerstand des Tellerfederpakets 9 in Richtung des zweiten Einspannelements 5 geschoben. Dabei drückt das Einspannelement 4 mit seiner Druckfläche 19, die vertieft liegt, auf die erste Tellerfeder. Dadurch verformt sich das Tellerfederpaket 9. Wenn die benötigte bzw. justierte axiale Kraft erreicht ist, hat sich das Tellerfederpaket 9 soweit verformt, dass der Taster 11 den Schalter 14 öffnet bzw. seinen Schaltzustand ändert.

Bei einem Nachlassen der axialen Kraft 2 stellt sich die Verformung des Tellerfederpakets 9 wieder zurück. Durch diese Rückverformung bewegt sich das Einspannelement 4 in X-Richtung und der Taster 11 schliesst den Schalter 14 bzw. ändert wieder den Schaltzustand des Schalters 14. Über eine Auswerteinheit kann jetzt eine Meldung oder ein Warnsignal ausgegeben werden, dass die benötigte bzw. bei der Justage der Überwachungsvorrichtung 1 eingestellte Kraft 2 unterschritten ist.

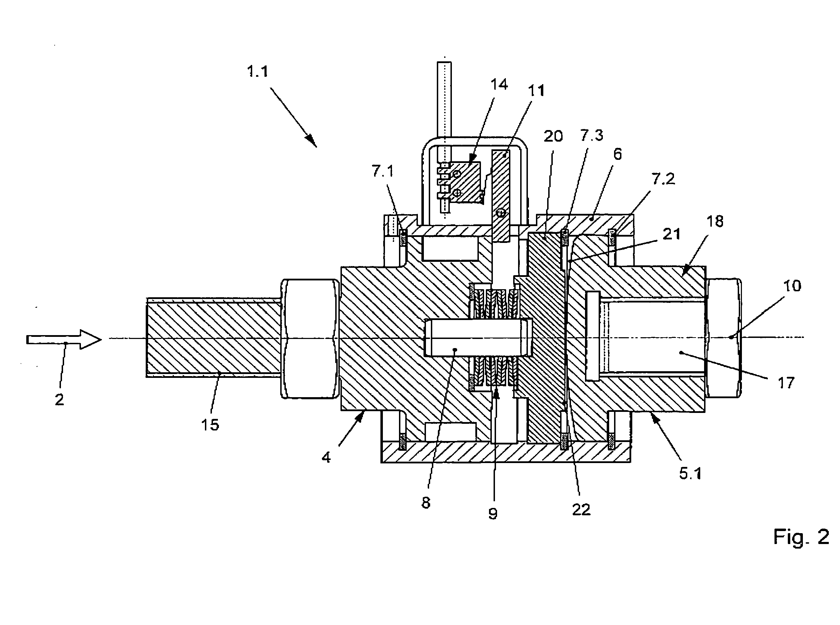

Figur 2 zeigt ein weiteres Ausführungsbeispiel einer erfindungsgemässen Überwachungsvorrichtung 1.1. Diese funktioniert bezüglich der Erfassung der Verformung des Tellerfederpakets 9 mittels des Schalter 14 analog zum vorhergehend beschriebenen Ausführungsbeispiel der Überwachungsvorrichtung 1. Allerdings ist zwischen dem ersten Einspannelement 4 und dem zweiten Einspannelement 5.1 eine Ausgleichsplatte 20 angeordnet, welche durch einen eigenen Sprengring 7.3 von dem zweiten Einspannelement 5.1 getrennt ist.

Das zweite Einspannelement 5.1 weist eine bombierte Oberfläche 21 auf. Diese steht in Wirkverbindung mit einer Rückseite 22 der Ausgleichsplatte 20.

Vorteilhafterweise erhält die Überwachungsvorrichtung 1.1 durch die bombierte Oberfläche 21, die in einem gewissen Masse gegenüber der Ausgleichsplatte 20 kipp- oder verschwenkbar ist, eine Flexibilität. Dadurch können Axialfehler, die bauteilbedingt sind oder bei der Montage auftreten, ausgeglichen werden.

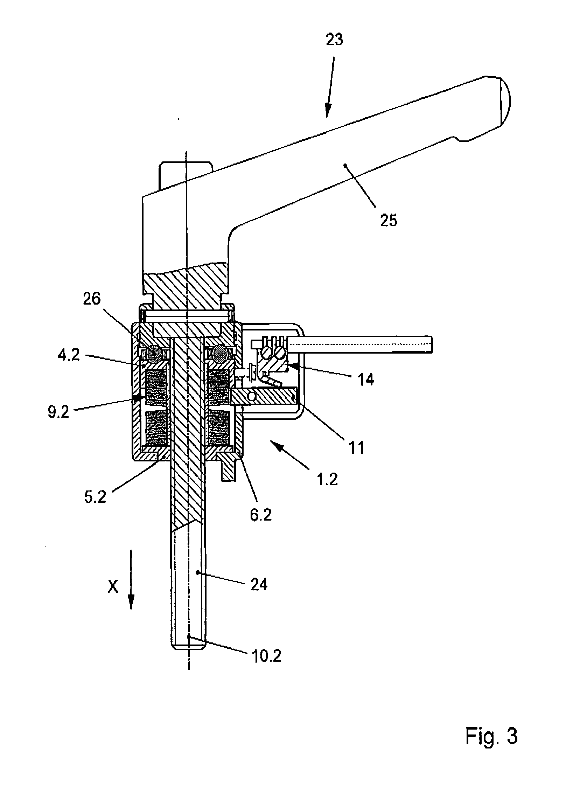

Figur 3 zeigt einen Klemmhebel 23 mit einem Gewindebolzen 24 und einem Griff 25 bei dem eine bestimmte Klemmkraft mittels einer Vorrichtung 12 überwacht wird. Die Überwachungsvorrichtung 1.2 ist dem Gewindebolzen 24 des Klemmhebels 23 zugeordnet. Dabei steht ein erstes Einspannelement 4.2 über ein Kugellager 26 mit dem Griff 25 in Wirkverbindung. Ein zweites Einspannelement 5.2 ist dem Gewindebolzen 24 konzentrisch und ortsfest zugeordnet. Die beiden Einspannelemente 4.2 und 5.2 sind in einem Gehäuse 6.2, das dem Gewindebolzen 24 ebenfalls ortsfest zugeordnet ist, geführt.

Konzentrisch zu einer Mittelachse 10.2 des Gewindebolzens 24 ist zwischen dem ersten und dem zweiten Einspannelement 4,2 und 5.2 ein Tellerfederpaket 9.2 aus sechs Tellerfedern zugeordnet.

Zur Erfassung der Verformung des Tellerfederpakets 9.2 ist diesem analog zu den vorhergehend beschriebenen Ausführungsbeispielen der Taster 11 und der Schalter 14 zugeordnet.

Die Funktionsweise dieses Ausführungsbeispiels ist folgende:
Der Gewindebolzen 24 des Klemmhebels 23 steht mit einem nicht dargestellten Innengewinde eines nicht dargestellten Bauteils in Wirkverbindung. Beim Klemmen wird der Hebel 23 gedreht und der Gewindebolzen bewegt sich in X-Richtung. Dabei wird das Einspannelement 4.2 ebenfalles in X-Richtung gegen die Gegenkraft des Tellerfederpakets 9.2 gedrückt, Über den Taster 11, der dem Einspannelement 4.2 zugeordnet ist und ebenfalls in X-Richtung bewegt wird, wird bei Erreichen einer definierten Klemmkraft der Schaltzustand des Schalters 14 geändert. Bei einer erneuten Änderung des Schaltzustand, die auf ein Nachlassen der Klemmkraft schliessen lässt, wird vorzugsweise eine Meldung oder ein Warnsignal ausgegeben.

### Bezugszeichenliste

| | | | | | |
|---|---|---|---|---|---|
| 1 | Überwachungsvorrichtung | 34 | | 67 | |
| 2 | Kraft | 35 | | 68 | |
| 3 | | 36 | | 69 | |
| 4 | erstes Einspannelement | 37 | | 70 | |
| 5 | zweites Einspannelemente | 38 | | 71 | |
| 6 | Gehäuse | 39 | | 72 | |
| 7 | Sprengring | 40 | | 73 | |
| 8 | schwimmend gelagerter Bolzen | 41 | | 74 | |
| 9 | Tellerfeder | 42 | | 75 | |
| 10 | Mittelachse | 43 | | 76 | |
| 11 | Taster | 44 | | 77 | |
| 12 | Öffnung | 45 | | 78 | |
| 13 | | 46 | | 79 | |
| 14 | Schalter | 47 | | | |
| 15 | Anschlussstelle | 48 | | | |
| 16 | | 49 | | | |
| 17 | Anschlussstelle | 50 | | | |
| 18 | | 51 | | X | X-Richtung |
| 19 | Druckfläche | 52 | | | |
| 20 | Ausgleichsplatte | 53 | | | |
| 21 | bombierte Oberfläche | 54 | | | |
| 22 | Rückseite | 55 | | | |
| 23 | Klemmhebel | 56 | | | |
| 24 | Gewindebolzen | 57 | | | |
| 25 | Griff | 58 | | | |
| 26 | Kugellager | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Überwachungsvorrichtung (1, 1.1, 1.2), insbesondere Klemmkraftdose, zur Überwachung einer Kraft (2, 2.1) bzw. eines Kraft ausübenden Elements (4, 4.2), gegen die eine Gegenkraft eines Energiespeichers (9, 9.2) wirkt,
**dadurch gekennzeichnet,**
**dass** dem Kraft ausübenden Element (4, 4.2) ein Schalter (14) zugeordnet ist.

2. Überwachungsvorrichtung nach Anspruch 1, **dadurch gekennzeichnet, dass** die Gegenkraft als Tellerfederpaket (9, 9.2) ausgebildet ist.

3. Überwachungsvorrichtung nach Anspruch 1 oder 2, **dadurch gekennzeichnet, dass** die Rotationssymmetrieachse des zumindest einen Energiespeichers (9, 9.2) konzentrisch zu einer Achse (10, 10.2) der Überwachungsvorrichtung (1, 1.1, 1.2) angeordnet ist.

4. Überwachungsvorrichtung nach einem der Ansprüche 1 bis 3, **dadurch gekennzeichnet, dass** zumindest zwei Energiespeicher (9, 9.2) in einem Stapel zueinander seitenverkehrt angeordnet sind.

5. Überwachungsvorrichtung nach einem der Ansprüche 1 bis 4, **dadurch gekennzeichnet, dass** die Überwachungsvorrichtung (1, 1.1, 1.2) ein erstes Einspannelement (4, 4.2) und ein zweites Einspannelement (5, 5.1, 5.2) umfasst.

6. Überwachungsvorrichtung nach Anspruch 5, **dadurch gekennzeichnet, dass** der zumindest eine Energiespeicher (9, 9.2) zwischen dem ersten Einspannelement (4, 4.2) und dem zweiten Einspannelement (5, 5.1, 5.2) angeordnet ist.

7. Überwachungsvorrichtung nach Anspruch 5 oder 6, **dadurch gekennzeichnet, dass** an einem Einspannelement (4, 4.2) ein Taster (11) für den Schalter (14) vorgesehen ist.

8. Überwachungsvorrichtung nach wenigstens einem der Ansprüche 5 bis 7, **dadurch gekennzeichnet, dass** zumindest ein Einspannelement (5.1) eine bombierte Oberfläche (21) aufweist.

9. Überwachungsvorrichtung nach wenigstens einem der Ansprüche 5 bis 8, **dadurch gekennzeichnet, dass** zwischen beiden Einspannelementen (4, 5.1) eine Ausgleichsplatte (20) angeordnet ist.

10. Überwachungsvorrichtung nach wenigstens einem der Ansprüche 5 bis 9, **dadurch gekennzeichnet, dass** das erste Einspannelement (4, 4.2) und das zweite Einspannelement (5, 5.1, 5.2) in einem Gehäuse (6, 6.2) angeordnet sind.

11. Überwachungsvorrichtung nach Anspruch 10, **dadurch gekennzeichnet, dass** die Einspannelemente (4 bzw. 5, 5.1) bzw. die Ausgleichsplatte (20) mittels Sprengringen (7.1 bis 7.3) in dem Gehäuse gehalten sind.

12. Klemmvorrichtung mit einer Überwachungsvorrichtung (1, 1.1, 1.2) nach einem der Ansprüche 1 bis 11, **dadurch gekennzeichnet, dass** mit der Überwachungsvorrichtung (1, 1.1, 1.2 eine Klemmkraft (2) ermittelbar ist.

13. Klemmvorrichtung nach Anspruch 12, **gekennzeichnet durch** einen Klemmhebel (23) zum Aufbringen einer Klemmkraft (2).

14. Klemmvorrichtung nach Anspruch 12, **gekennzeichnet durch** eine Kolben-/Zylindereinheit zum Aufbringen einer Klemmkraft (2).

15. Verfahren zur Überwachung einer Klemmkraft (2) eines Bauteils unter Verwendung einer Überwachungsvorrichtung (1, 1.1, 1.2) nach einem der Ansprüche 1 bis 11.
